# EUROPÄISCHE PATENTSCHRIFT

(11) **EP 3 230 696 B1**
(45) Veröffentlichungstag und Bekanntmachung des Hinweises auf die Patenterteilung: **05.02.2020**
(21) Anmeldenummer: 15794854.8
(22) Anmeldetag: 03.11.2015
(51) Int. Cl.: G01F 1/66

(54) **ULTRASCHALL-DURCHFLUSSMESSGERÄT**
ULTRASONIC FLOW METER
DÉBITMÈTRE ULTRASONIQUE

(30) Priorität: 09.12.2014 DE 102014118187
(43) Veröffentlichungstag der Anmeldung: 18.10.2017
(73) Patentinhaber: Endress+Hauser Flowtec AG, 4153 Reinach (CH)
(72) Erfinder: WIEST, Achim, 79576 Weil am Rhein (DE); KISSLING, Beat, CH-4153 Reinach (CH); MÜLLER, Quirin, CH-4112 Bättwil (CH); GRUNWALD, Sascha, 79585 Steinen (DE)
(74) Vertreter: Andres, Angelika Maria
(86) Internationale Anmeldenummer: PCT/EP2015/075527
(87) Internationale Veröffentlichungsnummer: WO 2016/091477

(56) Entgegenhaltungen:
- WO-A1-02/44662
- WO-A2-2005/031369
- DE-A1- 19 808 701
- DE-A1-102011 079 250
- DE-A1-102013 105 407
- DE-U1- 8 904 673
- US-A- 4 103 551
- US-A1- 2014 083 202

## Beschreibung

Die vorliegende Erfindung betrifft ein Messrohr ausgeführt zum Einsatz in einem Ultraschall-Durchflussmessgerät nach dem Oberbegriff des Anspruchs 1, ein Ultraschall-Durchflussmessgerät mit einem Messrohr nach Anspruch 6 sowie ein Verfahren zur Herstellung eines Messrohres nach Anspruch 9.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden. Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt. Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli - 1. August 2006 in Portland, Oregon, USA, vergleicht gängige Methoden zur Gewichtung der Laufzeiten entlang unterschiedlicher Signalpfade zur Berechnung des Durchflusses.

Die EP 0 715 155 A1 weist eine Messanordnung mit einer Mehrfachbrechung auf, wobei die Teilabschnitte des Signalpfades lediglich eine Ebene bilden, die parallel zur Messrohrachse verläuft. Die Reflexionsflächen an welcher ein erster Teilabschnitt des Signalpfades endet und sich ein zweiter Teilabschnitt des Signalpfades anschließt sind in der EP 0 715 155 A1 als ebene Formkörper dargestellt, die an der Innenseite des Rohres angebracht sind. Es ist zwar theoretisch möglich, Reflexionsflächen von den Endseiten eines Messrohres einzubringen und anschließend an der Innenwandung des Messrohres festzuschweißen, allerdings stößt eine derartige Herstellung bei kleineren Messrohren mit geringen Nennweiten schnell an seine Grenzen, da ein Schweißgerät bei kleinen Nennweiten mit großem Aufwand und unter Verlust von Präzision bei der Positionierung der Reflexionsformkörper eingesetzt werden kann. Somit ist die Lehre der EP 0 715 155 A1 auf Messrohre mit großen Nennweiten anwendbar.

Die DE 10 2008 055 030 A1 beschreibt einen durch Hydroforming ausgebildeten Anschlussstutzen in einem Ultraschalldurchflussmessgerät. In diesen Anschlussstutzen wird ein Ultraschallwandler eingesetzt. Die Signalübertragung erfolgt entlang eines geraden Signalpfades ohne dass das Signal an der Rohrwandung reflektiert wird. Das Messrohr des Durchflussmessgerätes weist dabei eine flache Form auf, so dass - anders als bei runden Querschnitten - bei diesem Messrohr weniger Störungen im Strömungsprofil durch Verwirbelungen auftreten können.

Die DE 102 49 542 A1 beschreibt eine Koppelfläche zur Einkopplung eines Ultraschallsignals von einem Ultraschallwandler in ein Messrohr, wobei die Koppelfläche schräg aus dem Messrohr herausgeformt ist. Das Messrohr weist zudem einen Formkörper 10 auf, welcher eine Reflexionsfläche bereitstellt.

Die EP 0 303 255 A1 stellt beschreibt ein Messrohr eines Ultraschalldurchflussmessgerätes, in welchem eine Reflexionsfläche integral mit dem Messrohr ausgebildet ist. Dabei kommt es über einen weiten Bereich zu einer Durchschnittsaufweitung des Messrohres, was ungünstig für die genaue Ermittlung der Messdaten ist.

Die DE 10 2012 013 916 A1 - sowie Fig. 6 und 7 der vorliegenden Anmeldung - zeigt demgegenüber ein Messrohr eines Ultraschalldurchflussmessgerätes mit eingeschraubten Reflexionsflächen. Dabei wird zunächst ein Anschlussstutzen mit einem Gewinde ausgeformt in welchen anschließend ein Reflektor eingesetzt werden kann. Diese Herstellungsvariante hat sich für alle Messrohre, unabhängig von ihrer Nennweite, grundsätzlich bewährt. Die Herstellung erfordert allerdings die genaue Einhaltung von vorgegebenen Bohrmustern und jeder Anschlussstutzen muss vor dem Einsetzen des Reflektors gesondert bearbeitet werden.

Eine Alternative bereits bekannte Variante ist das Gießen des Rohres und das Anschweißen von Stutzen am Messrohr und das anschließende Verschrauben oder Anschweißen einer Reflexionsfläche.

Aus der DE 10 2013 105 922 A1 ist ein Ultraschall-Durchflussmessgerät bekannt mit einem Messrohr, welches mittels Hochdruck-Umformverfahren hergestellt wurde. Die geometrische Genauigkeit bzw. Ausrichtung der Flächennormale im gewünschten Winkel ist bei umgeformten Reflexionsflächen gegenüber geschraubten Reflektoren jedoch geringer.

Aus der DE 198 08 701 A1 ist eine Vorrichtung zur Durchflussmessung bekannt, die in der Messrohrwand plattgepresste Stellen aufweist, die als Reflexionsflächen ausgebildet sind. Nachteilig bei dieser Art von Durchflussmessern ist jedoch, dass eine nachträgliche Justierung der Reflexionsflächen nicht möglich ist.

Aus der WO 2005/031369 A2 ist ein Ultraschall-Durchflussmesser bekannt, der zwei Reflektoren aufweist, die so ausgerichtet sind, dass die vom Ultraschallwandler ausgesendeten Schallwellen durch das strömende Fluid wieder zurück zum Ultraschallwandler geleitet werden. Die Reflektoren sind dabei in die Messrohrwand eingearbeitet oder in Form von Reflektorkörpern im Messkanal angeordnet. Nachteilig dabei ist jedoch, dass in den Messkanal angeordnete Reflektorkörper das Strömungsprofil des Mediums stören.

Die DE 10 2011 079250 A1 und die WO 02/44662 A1 lehren jeweils ein Ultraschall-Durchflussmessgerät, das Reflexionsstellen in der Innenwand des Messrohres aufweist. Diese sind entweder an der Innenwand befestigt oder in eine Vertiefung in die Innenwand versenkt. Somit nehmen sie keinen Einfluss auf das Strömungsprofil, lassen sich beim Einbauen jedoch nicht vollumfänglich justieren.

Die Aufgabe der Erfindung besteht darin, ein Ultraschall-Durchflussmessgerät mit mehreren Reflexionsflächen im Messrohr bereitzustellen, wobei das Messrohr mit verringerter Herstellzeit gefertigt werden kann, jedoch die Möglichkeit zur Festlegung hochgenau ausgerichteter Reflexionsflächen zur Vorgabe eines optimalen Signalpfades umfasst.

Die Aufgabe wird durch ein Messrohr mit den Merkmalen des Anspruchs 1 und durch ein Ultraschall-Durchflussmessgerät mit den Merkmalen des Anspruchs 6 gelöst.

Ein erfindungsgemäßes Messrohr, ausgeführt zum Einsatz in einem Ultraschall-Durchflussmessgerät, umfasst eine Messrohrwandung und zumindest bereichsweise eine Grundform mit rotationssymmetrischem oder polygonalem Querschnitt. Es weist eine gerade Messrohrachse (M) auf.

Das Messrohr weist zumindest eine Funktionsfläche zur Positionierung eines Reflektors auf, an welchem ein akustisches Signal auf einem Signalpfad reflektiert wird. Selbstverständlich kann im Fall eines sogenannten Zweitraversensystems bereits eine Funktionsfläche zur Positionierung eines einzigen Reflektors genügen. Dieser ermöglicht die Feineinstellung und die Feinausrichtung des Reflektors und der dazugehörigen Reflexionsfläche. Bei einem Messrohr, welches analog zur DE 10 2013 105 922 A1 für eine Mehrfachreflexion ausgelegt ist, sind selbstverständlich mehrere Funktionsflächen und Reflektoren notwendig.

Zumindest eine Funktionsfläche ist integral aus der Messrohrwandung ausgeformt. Sie ist nicht gegossen. Die Messrohrwandung ist vorzugsweise aus einem Metall gefertigt. Bekannterweise ist Metall duktil und lässt sich verformen. Ebenfalls bekannterweise erkennt der Fachmann einen Verformungsprozesse gegenüber einem Guss anhand der Ausrichtung des Metallgefüges im Schliffbild. Irgendwelche nachträglich angeschweißte oder angeklebte Funktionsflächen beruhen auch auf keinem Verformungsprozess, wie der Fachmann ebenfalls sofort an einem Schliffbild erkennen kann.

Die vorgenannte Funktionsfläche ist eine Kugelteilfläche und dient der Auflage eines Reflektors. Zumindest eine Funktionsfläche ist derart ausgerichtet, dass ein Messrohrabschnitt mit zumindest einer Funktionsfläche aus der Grundform des Messrohres nach außen hervorsteht.

Vorteilhafte Ausgestaltungen des erfindungsgemäßen Messrohres sind Gegenstand der entsprechenden Unteransprüche.

Es ist von Vorteil, wenn das Messrohr im Bereich zumindest einer Funktionsfläche eine geschlossene Messrohrwandung aufweist. Bei der Durchflussmessung ist eine Vermeidung von Bohrungen ein wichtiger Aspekt, Jede einzelne Bohrung muss auf Dichtigkeit bei den Mediumsdrücken geprüft werden. Zudem können verschiedene Medien das Dichtungsmaterial angreifen. Daher sollte das Messrohr lediglich ein Minimum an Bohrungen aufweisen.

Es ist weiterhin von Vorteil, wenn das Messrohr mehrere Funktionsflächen zur Positionierung jeweils eines Reflektors aufweist, wobei das Ultraschallsignal auf dem Signalpfad mehrfach reflektiert wird. Dies betrifft insbesondere eine Mehrfachreflexion mit einem Signalverlauf, analog zur DE 10 2013 105 922 A1, auf welche Druckschrift diesbezüglich vollumfänglich Bezug genommen wird. Es kann dabei so sein, dass lediglich eine Funktionsfläche ein Kreissegment aufweist und alle anderen Funktionsflächen z.B. eben, wie in der DE 10 2013 105 922 A1 ausgebildet sind. In diesem Fall erfolgt die Feinausrichtung nur mittels eines Reflektors.

Es ist von Vorteil, wenn das Messrohr im Übergangsbereich zwischen der Grundform der Messrohrwandung und zumindest einer Funktionsfläche eine Metallgefügestruktur aufweist, welche Metallgefügestruktur eine Orientierung in Verlaufsrichtung der Kontur des Messrohres aufweist. Das ist ein eindeutiger Nachweis auf das Herstellungsverfahren eines Umformverfahrens, mit welchem auch Messrohre geringer Blechstärke fertigbar sind. Dies betrifft insbesondere Messrohre mit einer Messrohrwandung aus Metallblech, vorzugsweise mit einer Blechdicke von 1-5 mm.

Besonders von Vorteil ist es wenn die zumindest eine Funktionsfläche durch ein Innenhochdruck-Umformverfahren aus dem Messrohr ausgeformt ist.

Ein erfindungsgemäßes Ultraschall-Durchflussmessgerät umfasst ein erfindungsgemäßes Messrohr ausgeführt zum Einsatz in einem Ultraschall-Durchflussmessgerät, einen Sender zum Senden eines akustischen Signals auf einem Signalpfad und einen Empfänger zum Empfangen des akustischen Signals auf dem Signalpfad.

Das erfindungsgemäße Messrohr weist zumindest einen Reflektor mit jeweils zumindest einer Reflexionsfläche auf.

In einer ersten Ausführungsvariante der Erfindung weist der Reflektor eine Anbindungsfläche auf, welche in zumindest einer Schnittansicht ein Kreissegment definiert.

Das Kreissegment ist komplementär zur Kreisteilfläche der Funktionsfläche des Messrohres ausgebildet ist. Das heißt es weist annähern das gleiche Bogenmaß auf. Der Reflektor ist auf der Funktionsfläche des Messrohres angeordnet.

Durch das Zusammenspiel der Reflektoren mit den Funktionsflächen wird eine Feineinstellung der Reflexionsflächen zur Ausrichtung auf einen idealen Signalpfad gewährleistet.

Vorteilhafte Ausgestaltungsvarianten eines Ultraschall-Durchflussmessgerätes sind Gegenstand der entsprechenden Unteransprüche Es ist von Vorteil das Messrohr mehrere Reflektoren aufweist, wobei das akustische Signal auf einem Signalpfad mehrfach reflektiert wird, insbesondere indem das akustische Signal jeweils an einer Reflexionsfläche eines jeden Reflektors zumindest einmal reflektiert wird.

Zur Erfassung eines möglichst umfassenden Strömungsprofils ist es von Vorteil, wenn sich der Signalpfad aus geraden Teilabschnitten zusammensetzt, wobei
a) jeweils die minimalen Abstände von mindestens drei Teilabschnitten einen Abstand von 0,4-0,6 r zur Messrohrachse aufweisen, wobei r der Innenradius des Messrohres ist;
b) wobei ein erster Teilabschnitt, welcher eine erste achsparallele Ebene definiert, einen unmittelbar korrespondierenden zweiten Teilabschnitt aufweist, welcher eine zweite achsparallele Ebene definiert, beide Ebenen durch eine Reflexionsfläche eines ersten Reflektors verlaufen und die Normalvektoren einen Winkel von weniger als 10° einschließen,
c) wobei ein dritter Teilabschnitt, welcher eine dritte achsparallele Ebene definiert, einen unmittelbar korrespondierenden vierten Teilabschnitt aufweist, welcher eine vierte achsparallele Ebene definiert,
wobei beide Ebenen durch einen zweiten Reflektor mit einer Reflexionsfläche verlaufen und die Normalvektoren einen Winkel von weniger als 10° einschließen.

Es ist zudem von Vorteil, wenn das Ultraschall-Durchflussmessgerät einen Rotationsausgleich von rotierenden Strömungen berücksichtigt.

Ein erfindungsgemäßes Verfahren zur Herstellung eines Messrohres ausgeführt zum Einsatz in einem Ultraschall-Durchflussmessgerät, umfasst die folgenden Schritte:
a. Umformen eines Messrohr durch ein Umformverfahren, insbesondere durch ein Hochdruckumformverfahren, unter Einbringung von mehreren Funktionsflächen, eine Kreisteilfläche beschreibt;
b. Positionieren von Reflektoren auf den Funktionsflächen, wobei der Reflektor eine zur Funktionsfläche komplementäre Fläche aufweist, wobei das Positionieren vorzugsweise derart erfolgt, dass ein Formenschluss mit zwischen Messrohrwand und Reflektor erreicht wird,
c. Ausrichten der Reflektoren um einen vordefinierten Ultraschallsignalpfad einzustellen, und
d. Festlegen der Reflektoren an der Messrohrwand.

Ein solches Verfahren ist produktionstechnisch einfach und sicher zu handhaben und kann bei exakter Einstellung des Signalpfades die Herstellungszeit und die Qualität des Messgerätes verbessern.

Besonders vorteilhaft kann das Festlegen der Reflektoren durch Einbringen einer folienartigen Zwischenschicht zwischen einer der Funktionsflächen eines Messrohres und einer Anbindungsfläche eines Reflektors erfolgt und durch Reactive Bonding erfolgen.

Nachfolgend sind weitere vorteilhafte Ausgestaltungen eines erfindungsgemäßen Ultraschall-Durchflussmessgerätes beschrieben.

Das erfindungsgemäße Messrohr kann in einzelne Messrohrabschnitte bzw. Teilbereiche unterteilt sein, welche miteinander verschweißt oder miteinander integral nahtstellenfrei, also ohne Schweißnähte, verbunden sind. Letzteres ist bevorzugt, da die nahtlosen Übergänge der Messrohrabschnitte bzw. Teilbereiche besonders kostengünstig und zeitsparend herstellbar sind. Darüber hinaus kann ein zusätzlicher Fertigungsschritt und ein zusätzliches Bauteil eingespart werden. Die Grundform kann lediglich abschnittsweise, insbesondere über lediglich einen Messrohrabschnitt bzw. einen ersten Teilbereich des Messrohres, ausgebildet sein oder sich über den gesamten Messrohrverlauf erstrecken. Bekannte Grundformen mit rotationssymmetrischem oder polygonalem Querschnitt im Bereich des Rohrbaus sind beispielsweise Zylinderformen oder oftmals in Gasleitung eingesetzt Rohrleitungen mit quaderförmiger Mantelfläche. Selbstverständlich sind auch andere eher unübliche Rohrgeometrien, wie z.B. Rohre mit prismaförmigen Mantelflächen vom Gegenstand der Erfindung erfasst.

Das Ultraschall-Durchflussmessgerät weist darüber hinaus einen Sender zum Senden eines akustischen Signals auf einen Signalpfad und einen Empfänger zum Empfangen des akustischen Signals auf dem Signalpfad auf. Die Begriffe Sender und Empfänger sind im Rahmen der vorliegenden Erfindung derart zu verstehen, dass der Sender und der Empfänger durch ein- und denselben Ultraschallwandler gestellt werden können. Der entsprechende Ultraschallwandler weist in diesem Fall einen Betriebsmodus für den Sendebetrieb auf und fungiert in diesem Betriebsmodus als Sender. Er weist zudem einen Betriebsmodus für den Empfangsmodus auf und fungiert in diesem Betriebsmodus als Empfänger. Nach dem Aussenden eines Ultraschallsignals kann der Ultraschallwandler vom Sende- in den Empfangsmodus umschalten, während das Ultraschallsignal einen Signalpfad im Messrohr durchläuft. Das Ultraschallsignal kann beim Durchlauf auf senkrecht auf eine Reflexionsfläche geführt werden und auf dem bereits durchlaufenen Signalpfad bis zum Ultraschallwandler rückgeführt werden. Wenn das Ultraschallsignal auf den Ultraschallwandler rückgeführt wird, befindet sich dieser im Empfangsmodus und stellt einen Empfänger dar. Insofern wird der Sender und der Empfänger durch zwei Schaltungsanordnungen (eine Schaltung für den Sendemodus und eine Schaltung für den Empfangsmodus) in ein und demselben Ultraschallwandler realisiert. Wesentlich häufiger und vorrangig durch den Gegenstand der Erfindung erfasst ist jedoch eine Anordnung aus zumindest zwei Ultraschallwandlern als Sender und Empfänger, welche jeweils zwischen dem Sende- und Empfangsbetriebsmodus umschaltbar sind. Die Messung zur Ermittlung der Durchflussgeschwindigkeit oder des Volumenstromes wird mittels der an sich bekannten Laufzeitdifferenzmethode durchgeführt.

Die Messung beruht vorzugsweise auf einer Mehrfachreflexion des Ultraschallsignals im Messrohr. Vorzugsweise propagiert dabei das Ultraschallsignal in axialer Richtung durch das Messrohr ohne jedoch einen parallelen Verlauf zur Messrohrachse aufzuweisen. Die Mehrfachreflexion hat dabei insbesondere das Ziel Messstörungen, welche durch die Rotation der Strömung hervorgerufen werden, zu kompensieren.

Zur Realisierung der Mehrfachreflexion weist das Messrohr mehrere Reflektoren auf, an welchen das akustische Signal auf dem Signalpfad mehrfach reflektiert wird, vorzugsweise zumindest einmal an jeder Reflexionsfläche. Es eine Vielzahl von Messgeräten bekannt, welche eine Einfachreflexion an der Messrohrwandung - eine sogenannte Zweitraversenanordnung realisiert. Auch auf diese Zweitraversenanordnung kann die vorliegende Erfindung angewandt werden. Im vorliegenden Fall zielt die Anmeldung allerdings besonders bevorzugt auf eine Mehrfachreflexion ab, bei der das Ultraschallsignal mehrfach hintereinander im Messrohr auf Teilsignalpfaden reflektiert wird.

Die Funktionsflächen zur Aufnahme der Reflektoren sind dabei integral aus der Messrohrwandung ausgeformt. Integral ausgeformt bedeutet in diesem Zusammenhang, dass die Funktionsflächen nicht als gesondertes Bauteil an oder im Messrohr angeschweißt sind sondern durch die Messrohrwandung bereitgestellt werden. Die Messrohrwandung ist dabei im Bereich der Funktionsflächen verformt und weicht in diesem Bereich von seiner Grundform ab. Integral ausgeformte Reflexionsflächen sind aus der DE 198 61 073 A1 oder auch aus der US 5 090 252 A bekannt. Diese Reflexionsflächen führen allerdings zu einer Verengung oder Aufweitung des Messrohrquerschnitts und ändern damit das Strömungsprofil im erheblichen Maße.

Durch diese wesentlich variablere Ausrichtung der Reflektoren sind auch kompliziertere Signalpfadverläufe realisierbar und der Signalpfad kann hochpräzise eingestellt werden.

Die Funktionsflächen können vorausgerichtet sein und derart ausgerichtet vorliegen, dass mehrere der Funktionsflächen zumindest aus der Grundform des Messrohres nach außen hervorstehen. Durch diese Anordnung lassen sich optimierte Signalpfadverläufe sehr einfach realisieren.

Die Funktionsflächen sind in die Messrohrwandung derart eingeformt, dass eine Mehrfachreflexion im Messrohr erfolgt, wobei der Signalpfad an zumindest drei in axialer Richtung hintereinander angeordneten Reflexionsflächen von Reflektoren reflektiert wird. Durch die hintereinander angeordneten Reflektoren kann eine Änderung des Strömungsprofils, welche sich über den vom Signalpfad definierten Messbereich entwickelt zumindest teilweise erfasst und kompensiert werden.

Bei schnellen Strömungen kann das Ultraschallsignal vom idealen Auftreffpunkt auf der jeweiligen Reflexionsfläche abweichen. Diese Abweichung setzt sich an der darauffolgenden Reflexionsfläche fort und kann im schlimmsten Fall bei Mehrfachreflexionen zu einem Signalverlust führen. Dieser Fehler ist im Rahmen der vorliegenden Erfindung als Verwehung definiert. Um diese Verwehungen zu vermeiden ist es von Vorteil, wenn die Reflexionsfläche oder die Reflexionsflächen der Reflektoren vorzugsweise konvex mit einer Reflexionsflächenkrümmung ausgebildet sind. Zwar ist die Rohrwandung eines zylindrischen Rohres selbst auch konvex ausgebildet, allerdings unterscheidet sich die Kontur der Reflexionsflächenkrümmung bei der vorliegenden Reflexionsfläche von einer Krümmung der Messrohrwandung. Dieser Unterschied kann sich insbesondere in der unterschiedlich Kreisbogenlänge bei gleichbleibenden Kreiswinkel ergeben oder durch einen Mittelpunktswinkel ergeben, welcher einen Scheitelpunkt aufweist, welcher nicht auf der Messrohrachse liegt.

Die zumindest eine Funktionsfläche ist vorteilhaft durch ein Innenhochdruck-Umformverfahren aus dem Messrohr ausgeformt. Das Innenhochdruck-Umformverfahren ist auch als Hydroforming bekannt. Dabei wird durch einen Innendruck eine Außenkontur verformt. Weiche abgerundete Übergänge zwischen den Messrohrelementen ist ein wesentliches Merkmal dieser Technik. Da der Innenrohrraum des Messrohres dadurch keine strömungsbehindernden scharfen Kanten aufweist, ist diese Technik besonders bevorzugt. Zudem ist die Produktionszeit eines Messrohres bei dieser Umformtechnik besonders gering.

Der Anschlussstutzen kann aus der ebenen Funktionsfläche mittels eines Fließbohr-Prozesses ausgeformt werden. Dadurch wird der Anschlussstutzen durch Materialverdrängung integral aus der Messrohrwandung ausgeformt. Ein gesondertes Bauteil für den Anschlussstutzen muss daher nicht hergestellt und in einem gesonderten Fertigungsschritt verschweißt werden, was eine Arbeitszeit und Kostenreduzierung bedeutet. Besonders bevorzugt kann ein Gewinde in diesen Anschlussstutzen eingeformt werden.

Es ist von Vorteil, wenn das Messrohr einen oder mehrere weitere Messrohrabschnitte bzw. Teilbereiche des Messrohres aufweist, welche einen größeren Messrohrquerschnitt aufweisen als der erste Teilbereich des Messrohres, wobei die Vergrößerung dieser Messrohrabschnitte durch ein Innenhochdruck-Umformverfahren des Messrohres erfolgt. Durch ersten Teilbereich mit geringerem Messrohrquerschnitt wird eine Erhöhung des Messeffektes erzielt. Dies erfolgt durch eine Erhöhung der Durchflussgeschwindigkeit und dadurch ein größeres Δt bei der Messung nach der Laufzeitdifferenzmethode.

Die Funktionsflächen sind insbesondere derart in das Messrohr eingeformt und die Reflektoren sind derart ausgerichtet, dass eine Ablenkung des Signalpfades derart erfolgt, dass zumindest drei aufeinanderfolgende Teilpfade des Signalpfades jeweils keinen Schnittpunkt mit der Messrohrachse aufweisen. Durch diese Anordnung wird das Strömungsprofil auf verschiedenen Ebenen erfasst. Symmetrische und asymmetrische Verwirbelungen im Strömungsprofil können besser ausgemittelt werden.

Der Verlauf des Signalpfades kann in axialer Draufsicht ein Vieleck beschreiben, dessen Seitenschnittpunkte innerhalb, auf oder außerhalb des Messrohres liegen. Durch diesen Signalpfadverlauf wird es dem Messgerät insbesondere ermöglicht einen Rotationsausgleich von rotierenden Strömungen bei der Messung zu berücksichtigen und zu kompensieren.
Fig. 1 axiale Draufsicht auf ein erfindungsgemäßes Ultraschall-Durchflussmessgerät;
Fig. 2 teiltransparente Perspektivansicht eines Ultraschall-Durchflussmessgerätes aus dem Stand der Technik; und
Fig. 3 Ansicht der Positionierung eines Reflektors in der Wandung des Messrohres des Ultraschall-Durchflussmessgerätes der Fig. 2.

Ultraschall-Durchflussmessgeräte, wie das erfindungsgemäße Ultraschall-Durchflussmessgerät, werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fliessgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von ausserhalb des Messrohrs an dessen Rohrwand gepresst. Im vorliegenden Fall handelt es sich jedoch vorzugsweise um ein sogenanntes Inline-Durchflussmessgerät, bei welchem die Ultraschallwandler fest im Messrohr integriert sind und das Ultraschallsignal direkt durch ein sogenanntes Ultraschallfenster vom Ultraschallwandler in das Medium eintritt.

Die im erfindungsgemäßen Durchflussmessgerät werden üblicherweise Ultraschallwandler eingesetzt. Diese Ultraschallwandler bestehen normalerweise aus einem elektromechanischen Wandlerelement, z.B. ein piezoelektrisches Element und einer Koppelschicht. Zwischen dem piezoelektrischen Element und der Koppelschicht kann eine weitere Schicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen. Weitere sogenannte Koppel- und/oder Anpassungsschichten, sowie metallische Scheiben und/oder Schichten für die bessere Temperaturleitung können vorgesehen sein.

Sowohl bei den meisten aus dem Stand der Technik bekannten Clamp-On-Systemen, als auch bei den meisten aus dem Stand der Technik bekannten Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert.

Im vorliegenden Ultraschall-Durchflussmessgerät erfolgt eine Mehrfachreflexion des Ultraschallsignals an Reflexionsflächen innerhalb des Messrohres. Durch die Aufsplittung in mehrere Signalpfade kann das Strömungsprofil des Ultraschall-Durchflussmessgerätes besser erfasst werden. Zudem können Strömungsrotationen und Strömungsverwirbelungen durch eine besonders günstige Führung des Signalpfades auf mehreren Teilsignalpfaden innerhalb des Messrohres ausgeglichen werden.

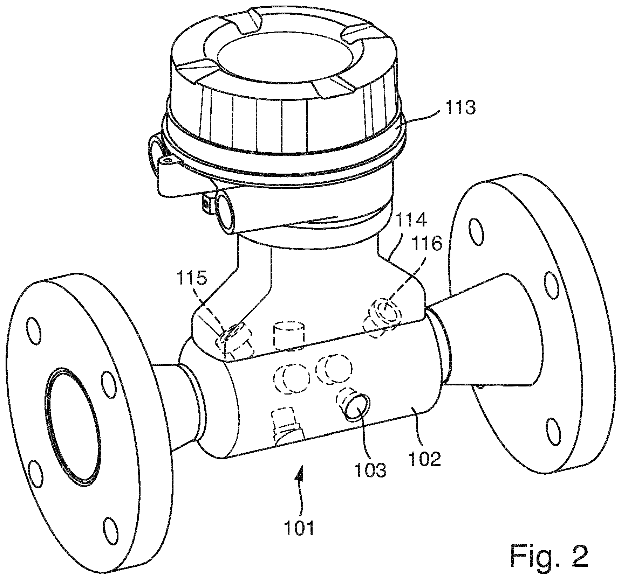

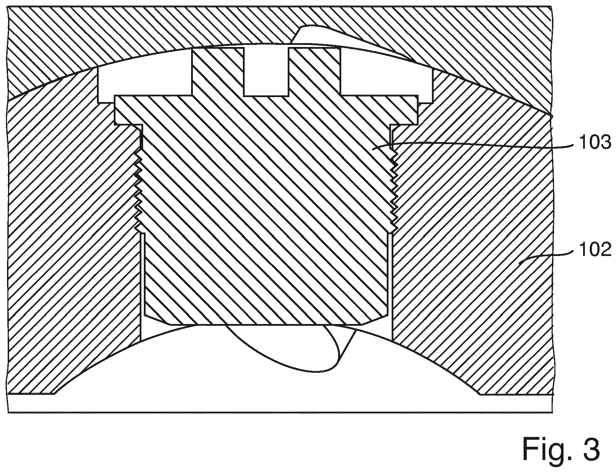

Fig. 2 zeigt einen Aufbau eines Ultraschall-Durchflussmessgerätes 101, wie es bereits aus der DE 10 2012 013 916 A1 und der DE 10 2013 105 922 A1 bekannt ist, auf weiche im Rahmen der vorliegenden Erfindung vollumfänglich Bezug genommen wird. Wie man aus Fig. 2 erkennt sind Reflektoren 103 in einem Messrohr 102 des diesem Ultraschall-Durchflussmessgerät 101 festgelegt. Dies erfolgt durch Einschrauben der Reflektoren 103 in dazu vorgesehene Anschlüsse. Diese eingeschraubten Reflektoren 103 sind in Fig. 3 nochmals im Detail dargestellt

In der Transparentdarstellung der Fig. 2 sind zudem zwei Ultraschallwandler dargestellt, welche als Sender 115 und als Empfänger 116 ausgebildet sind, dargestellt. Die Auswertung der Messsignale und die Weitergabe erfolgt in einem Transmitter 113, welcher im vorliegenden Beispiel über ein Anschlussstück 114 am Messrohr festgelegt ist.

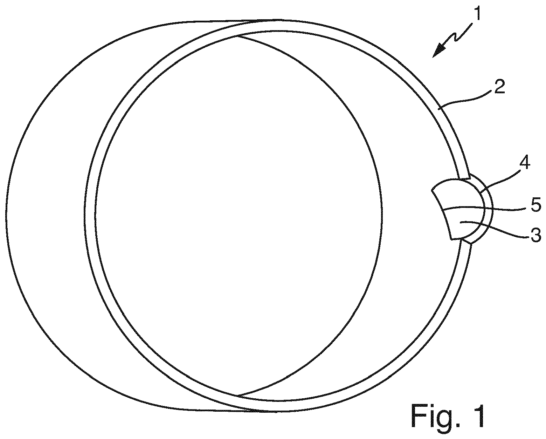

Diese Anordnung aus Sender, Empfänger, Transmitter 113 und Anschlussstück 114 und der Signalpfadverlauf sind baugleich auf die nachfolgenden Fig. 1 anwendbar.

Die in Fig. 1 vereinfacht dargestellte Ausgestaltungsvariante zeigt eine zur Fig. 2 und 3 erfindungsgemäß abgewandelte Ausführungsvariante. Es ist hier zur Vereinfachung allerdings nur ein vereinfachter Ausschnitt eines Messrohres 1 dargestellt. Dieses Messrohr 1 weist eine Messrohrwandung 2 auf. Auch in Fig. 1 zeigt die Messrohrwandung 2 eine integral ausgeformte Fläche welche von der Grundform der Messrohrwandung, hier in Form eines Zylinders, abweicht. Diese Fläche wird nachfolgend als Funktionsfläche 4 bezeichnet.

Anders als in Fig. 2 und 3 wird durch Anwendung eines Umformverfahrens keine ebene sondern eine gebogene Funktionsfläche 4 geschaffen. Diese gebogene Funktionsfläche 4 ist Teil der Messrohrwandung 2 dient der Aufnahme und der Führung eines Reflektorelements 3. Bei der Biegung der Funktionsfläche beschreibt eine Schnittansicht der Funktionsfläche 4 ein Kreissegment. Die Funktionsfläche 4 ist von innen in die Messrohrwandung 2 eingedrückt und steht am Außenumfang des Messrohres 1 aus der zylindrischen Grundform des Messrohres 1 hervor. Die Ausformung des Messrohres kann besonders bevorzugt durch ein Innenhochdruck-Umformverfahren, auch als Hydroforming bekannt, erfolgen. Dabei wird durch einen Innendruck die Kontur des Messrohres bereichsweise verformt. Da der Innenrohrraum des Messrohres dadurch keine strömungsbehindernden scharfen Kanten aufweist, ist diese Technik besonders bevorzugt. Zudem ist die Produktionszeit eines Messrohres bei dieser Umformtechnik besonders gering.

Die gebogene Funktionsfläche dient in erster Linie zur Führung und Ausrichtung der Reflektoren 3 im Messrohr. Dabei weist ein entsprechender Reflektor 3 einen Körper mit einer Zylinderteilfläche, Ellipsoidfläche oder erfindungsgemäß einer Kugelteilfläche auf. Dieser kann z.B. wie in Fig. 1, dargestellt direkt mit einer Reflexionsfläche 5 verbunden sein oder es kann ein gesonderter Körper vorgesehen sein, welcher mit der Zylinderteilfläche verbunden ist. Die dem Reflektor zugeordnete Zylinderteilfläche, Ellipsoidfläche oder erfindungsgemäße Kugelteilfläche liegt vorzugsweise formschlüssig auf der Zylinderteilfläche, Ellipsoidfläche oder erfindungsgemäßen Kugelteilfläche der Funktionsfläche der Messrohrwandung auf.

Es ist jedoch auch in einer weniger bevorzugten Ausführungsvariante möglich, dass entweder der Reflektor oder die Funktionsfläche Stege und/oder Vorsprünge aufweist, deren distale Enden in zumindest einer Schnittansicht alle auf demselben Kreissegment enden.

Der Reflektor kann sodann zum Erreichen des optimalen Schallpfades im Inneren des Messrohres ausgerichtet werden und dann an der Messrohrwand festgelegt werden. Zum Festlegen können unterschiedliche Technologien, so z.B. Kleben oder Löten zum Einsatz kommen. Besonders ideal ist jedoch ein Verschweißen des Reflektors mit dem Messrohr, insbesondere im Bereich des Kreissegments.

Es kann auch eine Befestigung unter Zuhilfenahme einer folienartigen Zwischenschicht erfolgen. Diese Befestigungstechnologie ist als "reactive bonding" bekannt und wird u.a. von M. Wiemer, J. Bräuer, D. Wünsch und T. Gessner in der Veröffentlichung "Reactive Bonding and Low Temperature Bonding of Heterogeneous Materials". ECS Transactions 33 (4). pp. 307-318 beschrieben. Besonders bevorzugt kann es sich bei der Zwischenschicht auch um eine Metallfolie handeln, welche als eine Redoxreaktion einen Stoffschluss zwischen Reflektor und Messrohrwand ermöglicht. Eine mögliche Redoxreaktion ist dabei die Thermitreaktion. Der besondere Vorteil ist darin zu sehen, dass die Aktivierungsenergie für einen Stoffschluss bei einem Reactive Bonding Material vergleichsweise gering ist, so dass z.B. geringe thermische Energie, Spannung, mechanische Energie oder Lichtenergie ausreicht um die Reaktion zu starten.

Zusammenfassend umfasst eine besonders bevorzugte Ausführungsvariante zur Herstellung des Messrohres der vorbeschriebenen Art folgende Schritte:
1. Umformen eines Messrohr durch ein Umformverfahren, insbesondere durch ein Hochdruckumformverfahren, unter Einbringung von mehreren Funktionsflächen, von welchen jede Funktionsfläche in zumindest einer Schnittansicht ein Kreissegment beschreibt bzw. definiert als definierte Position für einen Reflektor;
2. Positionieren von Reflektoren auf den Funktionsflächen, wobei der Reflektor eine zur Funktionsfläche komplementäre Fläche aufweist, wobei das Positionieren vorzugsweise derart erfolgt, dass ein Formenschluss mit zwischen Messrohrwand und Reflektor erreicht wird,
3. Ausrichten der Reflektoren um einen vordefinierten Ultraschallsignalpfad einzustellen, und
4. Festlegen der Reflektoren, z.B. durch Scheißen.

Das Positionieren und Ausrichten der Reflektoren kann vorzugsweise über Hilfsmittel und Werkzeuge erfolgen und der Winkel kann voreingestellt werden.

Durch Stromstoß kann dann beispielsweise eine Fixierung erfolgen.

Der besondere Vorteil dieser Art der Anbringung ist neben der Feinausrichtung der Reflektoren, dass das Messrohr an der Stelle der Reflektoren keine Öffnung zur Fixierung benötigt und somit das Messrohr als geschlossene Einheit erhalten bleibt.

## Patentansprüche

1. Messrohr (1) ausgeführt zum Einsatz in einem Ultraschall-Durchflussmessgerät,
welches Messrohr (1) eine Messrohrwandung (2) aufweist und
welches Messrohr (1) zumindest bereichsweise eine Grundform mit rotationssymmetrischem oder polygonalem Querschnitt und eine gerade Messrohrachse aufweist,
**wobei** das Messrohr (1) zumindest eine Funktionsfläche (4) zur Reflektion eines akustischen Signales auf einem Signalpfad aufweist, und
**wobei** die zumindest eine Funktionsfläche (4) integral aus der Messrohrwandung (2) ausgeformt ist
**dadurch gekennzeichnet,**
**dass** die zumindest eine Funktionsfläche (4) eine Kugelteilfläche ist, zur Positionierung eines Reflektors (3) ausgeführt ist und der Auflage des Reflektors (3) dient,
**wobei** die zumindest eine Funktionsfläche (4) derart ausgerichtet ist, dass ein Messrohrabschnitt mit der zumindest einen Funktionsfläche (4) aus der Grundform des Messrohres nach außen hervorsteht.

2. Messrohr nach Anspruch 1, **dadurch gekennzeichnet, dass** das Messrohr (2) im Bereich der zumindest einen Funktionsfläche (4) eine geschlossene Messrohrwandung (2) aufweist.

3. Messrohr nach Anspruch 1 oder 2, **dadurch gekennzeichnet, dass** das Messrohr (1) mehrere Funktionsflächen (4) zur Positionierung jeweils eines Reflektors (3) aufweist, wobei das Ultraschallsignal auf dem Signalpfad mehrfach reflektiert wird.

4. Messrohr nach einem der vorhergehenden Ansprüche, **dadurch gekennzeichnet, dass** das Messrohr (1) im Übergangsbereich zwischen der Grundform der Messrohrwandung (2) und der zumindest einen Funktionsfläche (4) eine Metallgefügestruktur aufweist, welche Metallgefügestruktur eine Orientierung in Verlaufsrichtung der Kontur des Messrohres (1) aufweist.

5. Messrohr nach einem der vorhergehenden Ansprüche, **dadurch gekennzeichnet, dass** das Messrohrwandung (2) aus Metallblech, vorzugsweise mit einer Blechdicke von 1-5 mm, besteht.

6. Ultraschall-Durchflussmessgerät, mit
einem Messrohr (1) nach einem der vorhergehenden Ansprüche, umfassend
einen Sender zum Senden eines akustischen Signals auf einen Signalpfad und
einen Empfänger zum Empfangen des akustischen Signals auf dem Signalpfad,
wobei das Messrohr (1) zumindest einen Reflektor (3) mit jeweils zumindest einer Reflexionsfläche (5) aufweist und
wobei der Reflektor (3) eine Anbindungsfläche aufweist, welche in zumindest einer Schnittansicht ein Kreissegment definiert, welches Kreissegment komplementär zur Kugelteilfläche der zumindest einen Funktionsfläche (4) des Messrohres (1) ausgebildet ist und
wobei der Reflektor (3) auf der zumindest einen Funktionsfläche (4) des Messrohres (1) angeordnet ist.

7. Ultraschall-Durchflussmessgerät nach Anspruch 6, **dadurch gekennzeichnet, dass** das Messrohr (1) mehrere Reflektoren (3) aufweist, wobei das akustische Signal auf dem Signalpfad mehrfach reflektiert wird, insbesondere indem das akustische Signal jeweils an einer Reflexionsfläche (5) eines jeden Reflektors (3) zumindest einmal reflektiert wird.

8. Ultraschall-Durchflussmessgerät, nach einem der vorhergehenden Ansprüche 6 oder 7, **dadurch gekennzeichnet, dass** sich der Signalpfad aus geraden Teilabschnitten zusammensetzt, **dadurch gekennzeichnet, dass**
a) jeweils die minimalen Abstände von mindestens drei Teilabschnitten einen Abstand von 0,4-0,6 r zur Messrohrachse aufweisen, wobei r der Innenradius des Messrohres (1) ist;
b) wobei ein erster Teilabschnitt, welcher eine erste achsparallele Ebene definiert, einen unmittelbar korrespondierenden zweiten Teilabschnitt aufweist, welcher eine zweite achsparallele Ebene definiert, beide Ebenen durch eine Reflexionsfläche eines ersten Reflektors verlaufen und die Normalvektoren einen Winkel von weniger als 10° einschließen,
c) wobei ein dritter Teilabschnitt, welcher eine dritte achsparallele Ebene definiert, einen unmittelbar korrespondierenden vierten Teilabschnitt aufweist, welcher eine vierte achsparallele Ebene definiert,
wobei beide Ebenen durch einen zweiten Reflektor mit einer Reflexionsfläche verlaufen und die Normalvektoren einen Winkel von weniger als 10° einschließen.

9. Verfahren zur Herstellung eines Messrohres ausgeführt zum Einsatz in einem Ultraschall-Durchflussmessgerät gemäß einem der Ansprüche 1 bis 5, wobei die Herstellung zumindest die folgenden Schritte umfasst:
a. Umformen eines Messrohr (2) durch ein Innenhochdruckumformverfahren, unter Einbringung von mehreren Funktionsflächen (4), von welchen jede Funktionsfläche (4) eine Kugelteilfläche beschreibt;
b. Positionieren von Reflektoren (3) auf den Funktionsflächen (4), wobei jeder Reflektor (3) eine zur Funktionsfläche (4) komplementäre Anbindungsfläche aufweist, wobei das Positionieren vorzugsweise derart erfolgt, dass ein Formenschluss mit zwischen Messrohrwand (2) und Reflektor (3) erreicht wird,
c. Ausrichten der Reflektoren (3) um einen vordefinierten Ultraschallsignalpfad einzustellen, und
d. Befestigen der Reflektoren (3) an der Messrohrwandung (2).

10. Verfahren nach Anspruch 9, **dadurch gekennzeichnet, dass** das Festlegen der Reflektoren (3) durch Einbringen einer folienartigen Zwischenschicht zwischen einer der Funktionsflächen (4) eines Messrohres (1) und einer Anbindungsfläche eines Reflektors (3) und durch Reactive Bonding erfolgt.

## Claims

1. Measuring tube (1) designed for use in an ultrasonic flowmeter, wherein said measuring tube (1) has a measuring tube wall (2) and
wherein said measuring tube (1) at least partially features a base form with a rotationally symmetric or polygonal cross-section and a straight measuring tube axis,
wherein the measuring tube (1) has at least one function surface (4) for the reflection of an acoustic signal on a signal path, and
wherein the at least one function surface (4) is integrally formed from the measuring tube wall (2)
**characterized in that**
the at least one function surface (4) is a spherical partial surface, which is designed for the positioning of a reflector (3) and serves to support the reflector (3),
wherein the at least one function surface (4) is aligned in such a way that a measuring tube section with the at least one function surface (4) projects externally out of the base form of the measuring tube.

2. Measuring tube as claimed in Claim 1, **characterized in that** the measuring tube (2) has a closed measuring tube wall (2) in the area of the at least one function surface (4).

3. Measuring tube as claimed in Claim 1 or 2, **characterized in that** the measuring tube (1) has several function surfaces (4) for the positioning of one reflector (3) per surface, wherein the ultrasonic signal is reflected several times on the signal path.

4. Measuring tube as claimed in one of the previous claims, **characterized in that** in the transition zone between the base form of the measuring tube wall (2) and the at least one function surface (4) the measuring tube (1) has a metal structure, wherein said metal structure has an orientation in the direction of the contour of the measuring tube (1).

5. Measuring tube as claimed in one of the previous claims, **characterized in that** the measuring tube wall (2) is made from a metal plate, preferably with a plate thickness of 1 to 5 mm.

6. Ultrasonic flowmeter, with
a measuring tube (1) as claimed in one of the previous claims, comprising
a transmitter to transmit an acoustic signal on a signal path and
a receiver to receive the acoustic signal on the signal path,
wherein the measuring tube (1) has at least one reflector (3) each with at least one reflection surface (5) and
wherein the reflector (3) has a connection surface, which defines a circle segment in at least one sectional view, wherein said circle segment is complementary to the spherical partial surface of the at least one function surface (4) of the measuring tube (1) and
wherein the reflector (3) is arranged on the at least one function surface (4) of the measuring tube (1).

7. Ultrasonic flowmeter as claimed in Claim 6, **characterized in that** the measuring tube (1) has multiple reflectors (3), wherein the acoustic signal is reflected multiple times on the signal path, particularly **in that** the acoustic signal is reflected at least once at a reflection surface (5) of each reflector (3).

8. Ultrasonic flowmeter as claimed in one of the previous Claims 6 or 7, **characterized in that** the signal path is comprised of straight segments, **characterized in that**
a) the minimum distances of at least three segments have a value of 0.4 to 0.6 r in relation to the measuring tube axis, r being the inner radius of the measuring tube (1);
b) wherein a first segment, which defines a first plane parallel to the axis, has a second segment which corresponds directly, said second segment defining a second plane parallel to the axis, wherein the two planes pass through a reflection surface of a first reflector and the normal vectors enclose an angle of less than 10°,
c) wherein a third segment, which defines a third plane parallel to the axis, has a fourth segment which corresponds directly, said fourth segment defining a fourth plane parallel to the axis,
wherein the two planes pass through a second reflector with a reflection surface and the normal vectors enclose an angle of less than 10°.

9. Procedure for the fabrication of a measuring tube designed to be used in an ultrasonic flowmeter as claimed in one of the Claims 1 to 5, wherein the fabrication comprises at least the following steps:
a. Shaping of a measuring tube (2) by means of an internal high pressure forming process, with the introduction of multiple function surfaces (4), wherein each of the function surfaces (4) describes a spherical partial surface;
b. Positioning of reflectors (3) on the function surfaces (4), wherein each reflector (3) has a connection surface that is complementary to the function surface (4), wherein the positioning is preferably implemented in such a way to obtain a positive fit between the measuring tube wall (2) and the reflector (3),
c. Alignment of the reflectors (3) in order to set a predefined ultrasonic signal path, and
d. Fastening of the reflectors (3) on the measuring tube wall (2).

10. Procedure as claimed in Claim 9, **characterized in that** the fixing of the reflectors (3) is implemented by introducing a foil-like intermediate layer between one of the function surfaces (4) of a measuring tube (1) and a connection surface of a reflector (3) and by reactive bonding.

## Revendications

1. Tube de mesure (1) destiné à une utilisation dans un débitmètre à ultrasons,
lequel tube de mesure (1) présente une paroi de tube de mesure (2) et
lequel tube de mesure (1) présente au moins partiellement une forme de base avec une section à symétrie de révolution ou polygonale et un axe de tube de mesure droit,
le tube de mesure (1) présentant au moins une surface fonctionnelle (4) pour la réflexion d'un signal acoustique sur un trajet de signal, et
l'au moins une surface fonctionnelle (4) étant formée intégralement sur la paroi de tube de mesure (2)
**caractérisé**
**en ce que** l'au moins une surface fonctionnelle (4) est une surface partielle de sphère, laquelle est prévue pour le positionnement d'un réflecteur (3) et sert de support au réflecteur (3),
l'au moins une surface fonctionnelle (4) étant alignée de telle sorte qu'une partie du tube de mesure avec l'au moins une surface fonctionnelle (4) dépasse de la forme de base du tube de mesure vers l'extérieur.

2. Tube de mesure selon la revendication 1, **caractérisé en ce que** le tube de mesure (2) présente dans la zone de l'au moins une surface fonctionnelle (4) une paroi de tube de mesure (2) fermée.

3. Tube de mesure selon la revendication 1 ou 2, **caractérisé en ce que** le tube de mesure (1) présente plusieurs surfaces fonctionnelles (4) pour le positionnement de chaque réflecteur (3), le signal ultrasonore étant réfléchi plusieurs fois sur le trajet de signal.

4. Tube de mesure selon l'une des revendications précédentes, **caractérisé en ce que** le tube de mesure (1) présente, dans la zone de transition entre la forme de base de la paroi de tube de mesure (2) et l'au moins une surface fonctionnelle (4) une structure métallique, laquelle structure métallique présente une orientation dans la direction de l'extension du contour du tube de mesure (1).

5. Tube de mesure selon l'une des revendications précédentes, **caractérisé en ce que** la paroi de tube de mesure (2) est constituée d'une tôle métallique, de préférence avec une épaisseur de tôle de 1 à 5 mm.

6. Débitmètre à ultrasons, avec
un tube de mesure (1) selon l'une des revendications précédentes, comprenant un émetteur destiné à l'émission d'un signal acoustique sur un trajet de signal et un récepteur destiné à la réception du signal acoustique sur le trajet de signal,
le tube de mesure (1) comportant au moins un réflecteur (3) avec chacun au moins une surface de réflexion (5) et
le réflecteur (3) présentant une surface de liaison (4), laquelle définit au moins dans une vue en coupe un segment de cercle, lequel segment de cercle est complémentaire à la surface partielle de sphère de l'au moins une surface fonctionnelle (4) du tube de mesure (1) et
le réflecteur (3) étant disposé sur l'au moins une surface fonctionnelle (4) du tube de mesure (1).

7. Débitmètre à ultrasons selon la revendication 6, **caractérisé en ce que** le tube de mesure (1) comporte plusieurs réflecteurs (3), le signal acoustique étant réfléchi plusieurs fois sur le trajet du signal, notamment **en ce que** le signal acoustique est réfléchi au moins une fois sur une surface de réflexion (5) de chacun des réflecteurs (3).

8. Débitmètre à ultrasons selon l'une des revendications précédentes 6 ou 7, **caractérisé en ce que** le trajet de signal se compose de segments droits, **caractérisé en ce que**
a) les distances minimales respectives d'au moins trois segments présentent une valeur de 0,4 à 0,6 r par rapport à l'axe de tube de mesure, r étant le rayon intérieur du tube de mesure (1) ;
b) un premier segment, lequel définit un premier plan parallèle à l'axe, comportant un deuxième segment directement correspondant, lequel deuxième segment définit un deuxième plan parallèle à l'axe, les deux plans passant par une surface de réflexion d'un premier réflecteur et les vecteurs normaux définissant un angle de moins de 10°,
c) un troisième segment, lequel définit un troisième plan parallèle à l'axe, comportant un quatrième segment directement correspondant, lequel quatrième segment définit un quatrième plan parallèle à l'axe,
les deux plans passant à travers un deuxième réflecteur avec une surface de réflexion et les vecteurs normaux définissant un angle de moins de 10°.

9. Procédé destiné à la fabrication d'un tube de mesure exécuté en vue d'une utilisation dans un débitmètre selon l'une des revendications 1 à 5, la fabrication comprenant au moins les étapes suivantes :
a. Formage d'un tube de mesure (2) par un procédé de formage à haute pression interne, avec l'introduction de plusieurs surfaces fonctionnelles (4), parmi lesquelles chacune des surfaces fonctionnelles (4) décrit une surface partielle de sphère ;
b. Positionnement de réflecteurs (3) sur les surfaces fonctionnelles (4), pour lesquelles chaque réflecteur (3) présente une surface de liaison complémentaire à la surface fonctionnelle (4), le positionnement intervenant de préférence de telle sorte à obtenir une complémentarité de forme entre la paroi de tube de mesure (2) et le réflecteur (3),
c. Alignement des réflecteurs (3) afin de régler un trajet de signal ultrasonore prédéfini, et
d. Fixation des réflecteurs (3) sur la paroi de tube de mesure (2).

10. Procédé selon la revendication 9, **caractérisé en ce que** la fixation des réflecteurs (3) est réalisée par l'application d'une couche intermédiaire en forme de film entre l'une des surfaces fonctionnelles (4) d'un tube de mesure (1) et une surface de liaison d'un réflecteur (3) et par liaison réactive.
